# EUROPEAN PATENT SPECIFICATION

(11) **EP 3 162 532 B1**
(45) Date of publication and mention of the grant of the patent: **25.09.2019**
(21) Application number: 15814041.8
(22) Date of filing: 07.05.2015
(51) Int. Cl.: B29B 7/20, B29B 7/26, B29C 48/40, B29C 48/52, B29C 48/535, B29C 48/64, B29C 48/693, B29B 7/74

(54) **TWIN-SCREW EXTRUDER**
DOPPELSCHNECKENEXTRUDER
EXTRUDEUSE À DEUX VIS

(30) Priority: 30.06.2014 JP 2014134576
(43) Date of publication of application: 03.05.2017
(73) Proprietor: Nihon Spindle Manufacturing Co., Ltd., Hyogo 661-8510 (JP)
(72) Inventor: FUKUDA, Hiroyuki, Amagasaki-city Hyogo 661-8510 (JP); SAIUCHI, Shigeto, Amagasaki-city Hyogo 661-8510 (JP)
(74) Representative: Louis Pöhlau Lohrentz
(86) International application number: PCT/JP2015/063179
(87) International publication number: WO 2016/002333

(56) References cited:
- EP-A1- 0 775 568
- EP-A1- 0 775 569
- EP-A1- 0 808 705
- EP-A1- 2 286 975
- CN-Y- 201 098 991
- DE-A1- 10 113 949
- JP-A- H0 985 801
- JP-A- S5 836 425
- JP-A- H04 103 328
- JP-A- S60 154 030
- JP-A- 2005 238 653
- JP-A- 2009 248 486
- JP-A- 2014 113 706
- US-A- 4 511 320
- US-A1- 2005 226 093

## Description

### Technical Field

The present invention relates to a twin-screw extruder, and more particularly, to a twin-screw extruder from which a large extrusion force is obtained.

### Background Art

In the past, a twin-screw extruder has been widely used to preliminarily mold a high-viscosity material (hereinafter, referred to as a "material"), such as an unmolded rubber raw material or an unmolded plastic raw material, to a shape, which is suitable for the next process, while extruding the high-viscosity material by a screw blade.

As the twin-screw extruder, there is a twin-screw extruder (which may be referred to as a "twin-screw tapered extruder" hereinafter) in which two screw shafts are rotatably provided in a casing including a tapered cylinder-shaped hopper unit and a tapered cylinder-shaped compression unit. The hopper unit is provided with a material inlet, the compression unit is subsequent to the hopper unit and is provided with a material outlet at a tip thereof, and each of the screw shafts is provided with a tapered screw blade.

Since the height of the screw blade on the base end side of the screw shaft is set to be larger than the height of the screw blade on the tip side in the twin-screw tapered extruder, the opening area of the material inlet can be increased. Accordingly, the twin-screw tapered extruder has a merit of smoothly crushing a material and supplying the material to the compression unit even though a material is input from the material inlet in the form of a large lump.

Incidentally, the twin-screw extruder requires a function to crush a massive material, which is input from the material inlet, and to supply the material to the compression unit at the position of the hopper unit; and requires a function to compress the material, to generate pressure required for extruding the material from the material outlet, and to ensure the amount of the material, which is to be processed, by suppressing the back flow of the material at the position of the compression unit.

For this reason, in the twin-screw tapered extruder in the related art, the size of the lead angle of the screw blade at the position of the compression unit has been set to be smaller than the size of the lead angle of the screw blade at the position of the hopper unit (for example, Japanese Unexamined Patent Application Publication No. 2006-305976 and US 2005/0226093 A1).

### Summary of Invention

### Technical Problem

Incidentally, since bending stress is applied to two shafts facing each other and are bent in the case of the twin-screw tapered extruder unlike in a single-screw extruder, it is necessary to set a large clearance between the inner wall surface of the casing and the outer edge of the screw blade in order to prevent the contact between the inner wall surface of the casing and the outer edge of the screw blade during operation. However, due to the large clearance, the back flow of the material is likely to be generated and it is difficult to increase pressure for extruding the material from the material outlet. For this reason, the twin-screw tapered extruder in the related art could not been used for a use in which high extrusion pressure is required as in, for example, a case in which a mesh screen is provided in the material outlet to remove foreign matters contained in the material.

The invention has been made in consideration of the problem of the twin-screw tapered extruder in the related art, and an object of the invention is to provide a twin-screw extruder that can also be effectively used for e.g. straining, by suppressing an increase in load power and the generation of heat of a material in a hopper unit and increasing pressure for extruding a material from a material outlet of a compression unit.

### Solution to Problem

In order to achieve the object, a twin-screw extruder according to claim 1 is provided which includes two screw shafts that are rotatably provided in a casing including a hopper unit and a compression unit. The hopper unit is provided with a material inlet, the compression unit is subsequent to the hopper unit and is provided with a material outlet at a tip thereof, and each of the screw shafts is provided with a tapered screw blade. The size of a lead angle of the screw blade at the position of the compression unit is set to be smaller than the size of a lead angle of the screw blade at the position of the hopper unit, and the screw blade is disposed at the position of the compression unit so as to be wound two or more times.

In this case, the lead angle of the screw blade at the position of the compression unit may be set to the range of 10° to 24°.

Further, the length of the compression unit may be set to 2.5 times or more the dimension of the radius of an inner wall of a tip portion of the casing.

Furthermore, the thickness of the screw blade at the position of the compression unit is set to be larger than the thickness of the screw blade at the position of the hopper unit.

According to the invention, a mesh screen is detachably provided in the material outlet.

### Advantageous Effects of Invention

According to the twin-screw extruder of the invention, the size of the lead angle of the screw blade at the position of the compression unit is set to be smaller than the size of the lead angle of the screw blade at the position of the hopper unit, more specifically, the lead angle of the screw blade at the position of the compression unit is set to the range of 10° to 24° and the screw blade is disposed at the position of the compression unit so as to be wound two or more times. Accordingly, a function to crush a massive material, which is input from the material inlet, and to supply the crushed material to the compression unit can be displayed at the position of the hopper unit; and a function to compress the material, to generate pressure required for extruding the material from the material outlet, and to ensure the amount of the material, which is to be processed, by suppressing the back flow of the material can be displayed at the position of the compression unit. Therefore, it is possible to provide a twin-screw extruder that can be effectively used for e.g. straining, by suppressing an increase in load power and the generation of heat of a material in a hopper unit and increasing pressure for extruding a material from a material outlet of a compression unit.

Further, since the length of the compression unit is set to 2.5 times or more the dimension of the radius of an inner wall of a tip portion of the casing, a function to ensure the amount of the material, which is to be processed, by reliably suppressing the back flow of the material can be displayed.

Furthermore, since the thickness of the screw blade at the position of the compression unit is set to be larger than the thickness of the screw blade at the position of the hopper unit, pressure for extruding the material from the material outlet can be further increased.

Since the mesh screen is detachably provided in the material outlet, it is possible to remove foreign matters that are contained in a material by a series of processes. Accordingly, it is possible to improve the quality of the material and to shorten a process.

### Brief Description of Drawings

FIGS. 1A and 1B show an example of a twin-screw extruder of the invention, FIG. 1A is a view showing the entire twin-screw extruder, and FIG. 1B is a plan view of a hopper unit.
FIG. 2 is a plan sectional view of the twin-screw extruder.

### Description of Embodiments

An embodiment of a twin-screw extruder of the invention will be described below with reference to drawings.

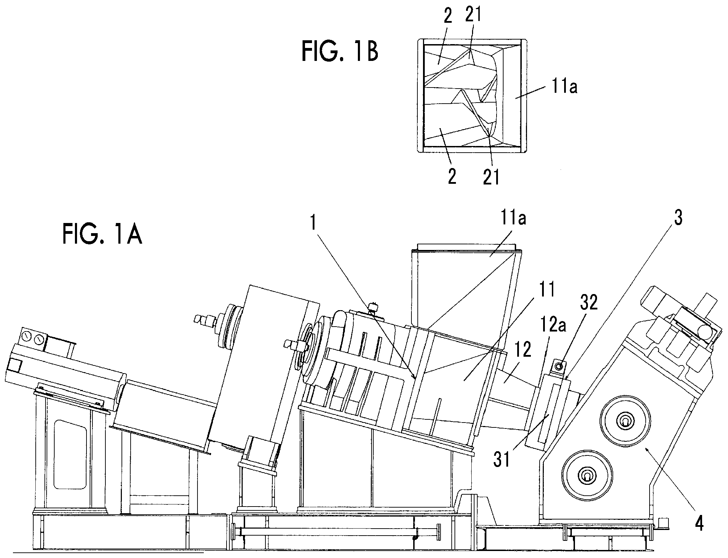

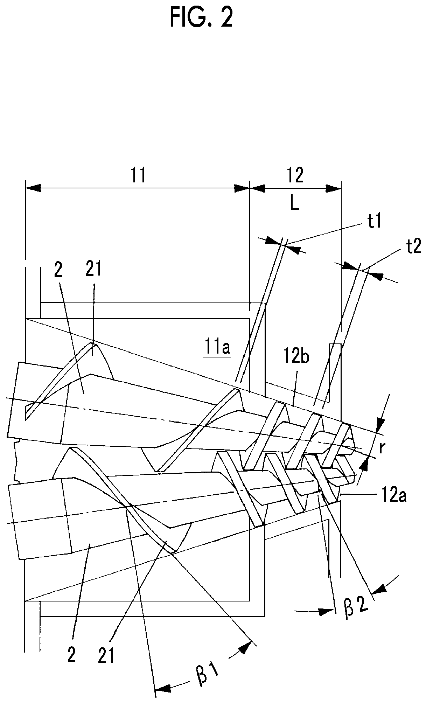

FIGS. 1 to 2 show an example of a twin-screw extruder of the invention.

As in the case of the twin-screw tapered extruder in the related art, the twin-screw extruder is adapted so that two screw shafts 2 are rotatably provided in a casing 1 including a tapered cylinder-shaped hopper unit 11 and a tapered cylinder-shaped compression unit 12. The hopper unit 11 is provided with a material inlet 11a, the compression unit 12 is subsequent to the hopper unit 11 and is provided with a material outlet 12a at a tip thereof, and each of the screw shafts 2 is provided with a tapered screw blade 21.

Further, in this example, the size of the lead angle β2 of the screw blade 21 at the position of the compression unit 12 is set to be smaller than the size of the lead angle β1 of the screw blade 21 at the position of the hopper unit 11 (which is the same as in the twin-screw tapered extruder in the related art) and the screw blade 21 is disposed at the position of the compression unit 12 so as to be wound two or more times.

Here, the sizes of the lead angles β1 and β2 are not particularly limited. The lead angle β1 is set to the range of 25° to 50° and is preferably set to the range of about 30° to 45°, and the lead angle β2 is set to the range of 10° to 24° and is preferably set to the range of about 12° to 20°.

Further, the number of turns of the screw blade 21 at the position of the compression unit 12 is set to two or more, is preferably set to the range of 2 to 4, and is more preferably set to the range of 2 to 3.

Accordingly, a function to crush a massive material, which is input from the material inlet 11a, and to supply the crushed material to the compression unit 12 can be displayed at the position of the hopper unit 11; and a function to compress the material, to generate pressure required for extruding the material from the material outlet 12a, and to ensure the amount of the material, which is to be processed, by suppressing the back flow of the material can be displayed at the position of the compression unit 12.

In this case, the length L of the compression unit 12 is set to 2.5 times or more the dimension of the radius r of an inner wall of the tip portion of the casing 1 (a distance between the axis of the screw shaft 2 and an inner wall surface 12b of the tip portion of the casing 1), is preferably set to the range of 3.0 to 6.0 times the radius r, and is more preferably set to the range of 3.5 to 5.0 times the radius r.

Accordingly, the function to ensure the amount of the material, which is to be processed, by reliably suppressing the back flow of the material can be displayed.

Further, the thickness t2 of the screw blade 21 at the position of the compression unit 12 is set to be larger than the thickness t1 of the screw blade 21 at the position of the hopper unit 11.

That is, the thickness t1 of the screw blade 21 at the position of the hopper unit 11 is set to be substantially the same as that of the twin-screw tapered extruder in the related art; and the thickness t2 of the screw blade 21 at the position of the compression unit 12 is set to the range of about 1.5 to 3.0 times the thickness t1 and is preferably set to the range of about 1.8 to 2.5 times the thickness t1.

Accordingly, pressure for extruding the material from the material outlet 12a can be further increased.

Since the screw blade 21 is generally formed by mounting a plate-like member on the screw shaft 2 by welding or the like, each of the thickness t1 of the screw blade 21 at the position of the hopper unit 11 and the thickness t2 of the screw blade 21 at the position of the compression unit 12 is set to be constant as in this example. However, in a case in which the screw blade 21 is formed by cutting or the like, the screw blade 21 can also be formed so that the thickness of the screw blade 21 is gradually increased toward a tip side from a base end side.

According to this twin-screw extruder, the twin-screw extruder has a function to crush a massive material, which is input from the material inlet 11a of the hopper unit 11, and to smoothly supply the crushed material to the compression unit 12 as in the case of the twin-screw tapered extruder in the related art, and can prevent the back flow of a material in the compression unit 12 and increase pressure for extruding the material from the material outlet 12a.

Accordingly, the twin-screw extruder can also be used for a use in which high extrusion pressure is required.

Specifically, as shown in FIG. 1A, a mesh screen 31 is disposed in the material outlet 12a and a material from which foreign matters have been removed can be supplied to a roller head 4, which is provided on the rear stage of the material outlet 12a, through the mesh screen 31.

In this case, the mesh screen 31 is adapted to be capable of being moved in a horizontal direction by a slide mechanism 32 and is adapted to be capable of being alternately used and cleaned.

Accordingly, since it is possible to remove foreign matters that are contained in a material by a series of processes, it is possible to improve the quality of the material and to shorten a process.

### Industrial Applicability

The twin-screw extruder of the invention can suppress an increase in load power and the generation of heat of a material in the hopper unit and can increase pressure for extruding a material from the material outlet in the compression unit. Accordingly, the twin-screw extruder of the invention can be suitably used for a use in which high extrusion pressure is required as in a case in which a mesh screen is provided in the material outlet to remove foreign matters contained in the material.

### Reference Signs List

1: casing
11: hopper unit
11a: material inlet
12: compression unit
12a: material outlet
12b: inner wall surface of casing of compression unit
2: screw shaft
21: screw blade
31: mesh screen
32: slide mechanism
4: roller head
L: length of compression unit
t1: thickness of screw blade at position of hopper unit
t2: thickness of screw blade at position of compression unit
β1: lead angle of screw blade at position of hopper unit
β2: lead angle of screw blade at position of compression unit

## Claims

1. A twin-screw extruder comprising:
two screw shafts (2) that are rotatably provided in a casing (1) including a hopper unit (11) and a compression unit (12), the hopper unit (11) being provided with a material inlet (11a), the compression unit (12) being subsequent to the hopper unit (11) and being provided with a material outlet (12a) at a tip thereof, and each of the screw shafts (2) being provided with a tapered screw blade (21),
wherein the size of a lead angle (β2) of the screw blade (21) at the position of the compression unit (12) is set to be smaller than the size of a lead angle (β1) of the screw blade (21) at the position of the hopper unit (11),
wherein the screw blade (21) is disposed at the position of the compression unit (12) so as to be wound two or more times,
and wherein a mesh screen (31) is detachably provided in the material outlet (12a),
**characterized in that** the thickness (t2) of the screw blade (21) at the position of the compression unit (12) is larger than the thickness (t1) of the screw blade (21) at the position of the hopper unit (11).

2. The twin-screw extruder according to claim 1,
wherein the lead angle (β2) of the screw blade (21) at the position of the compression unit (12) is set to the range of 10° to 24°.

3. The twin-screw extruder according to claim 1 or 2,
wherein the length of the compression unit (12) is set to 2.5 times or more the dimension of the radius of an inner wall of a tip portion of the casing (1).

## Patentansprüche

1. Doppelschneckenextruder, umfassend:
zwei Schneckenwellen (2), die drehbar in einem Gehäuse (1) vorgesehen sind, das eine Trichtereinheit (11) und eine Kompressionseinheit (12) umfasst, wobei die Trichtereinheit (11) mit einem Materialeinlass (11a) versehen ist, wobei die Kompressionseinheit (12) nach der Trichtereinheit (11) angeordnet ist und mit einem Materialauslass (12a) an einer Spitze davon versehen ist, und wobei beide Schneckenwellen (2) mit einem konisch zulaufenden Schneckenblatt (21) versehen sind,
wobei die Größe eines Führungswinkels (β2) der Schneckenwelle (21) bei der Position der Kompressionseinheit (12) so festgelegt ist, dass sie kleiner als die Größe eines Führungswinkels (β1) des Schneckenblatts (21) bei der Position der Trichtereinheit (11) ist,
wobei das Schneckenblatt (21) an der Position der Kompressionseinheit (12) so angeordnet ist, dass es zweimal oder häufiger gewunden ist, und
wobei ein Maschensieb (31) in dem Materialauslass (12a) abnehmbar vorgesehen ist,
**dadurch gekennzeichnet, dass**
die Dicke (t2) des Schneckenblatts (21) bei der Position der Kompressionseinheit (12) größer als die Dicke (t1) des Schneckenblatts (21) bei der Position der Trichtereinheit (11) ist.

2. Doppelschneckenextruder nach Anspruch 1, wobei der Führungswinkel (β2) des Schneckenblatts (21) bei der Position der Kompressionseinheit (12) so festgelegt ist, dass er im Bereich von 10° bis 24° liegt.

3. Doppelschneckenextruder nach Anspruch 1 oder 2, wobei die Länge der Kompressionseinheit (12) so festgelegt ist, dass sie das 2,5-Fache der Abmessung des Radius einer Innenwand eines Spitzenabschnitts des Gehäuses (1) oder mehr beträgt.

## Revendications

1. Une extrudeuse à deux vis comprenant :
deux arbres à vis (2) qui sont prévus en rotation dans un boîtier (1) comprenant une unité de trémie (11) et une unité de compression (12), l'unité de trémie (11) étant prévue avec une entrée de matériau (11a), l'unité de compression (12) étant consécutive à l'unité de trémie (11) et étant prévue avec une sortie de matériau (12a) au niveau de sa pointe, et chacun des arbres à vis (2) étant prévu avec une lame de vis progressivement rétrécie (21),
dans laquelle la taille d'un angle d'attaque (β2) de la lame de vis (21) dans la position de l'unité de compression (12) est inférieure à la taille d'un angle d'attaque (β1) de la lame de vis (21) dans la position de l'unité de trémie (11), dans laquelle
la lame de vis (21) est disposée dans la position de l'unité de compression (12) afin d'être enroulée deux fois ou plus,
et dans laquelle
un tamis à mailles (31) est prévu de manière détachable dans la sortie de matériau (12a),
**caractérisée en ce que** l'épaisseur (t2) de la lame de vis (21) dans la position de l'unité de compression (12) est supérieure à l'épaisseur (t1) de la lame de vis (21) dans la position de l'unité de trémie (11).

2. L'extrudeuse à deux vis selon la revendication 1,
dans laquelle l'angle d'attaque (β2) de la lame de vis (21) dans la position de l'unité de compression (12) est déterminé dans la plage de 10° à 24°.

3. L'extrudeuse à deux vis selon la revendication 1 ou 2,
dans laquelle la longueur de l'unité de compression (12) représente 2,5 fois ou plus la dimension du rayon d'une paroi interne d'une partie de pointe du boîtier (1).
